# EUROPEAN PATENT APPLICATION

(11) **EP 4 636 968 A1**
(43) Date of publication of application: **22.10.2025**
(21) Application number: 24170234.9
(22) Date of filing: 15.04.2024
(51) Int. Cl.: H02J 1/08, H02J 7/02

(54) **ELECTRICAL SYSTEM WITH ADAPTIVELY CHARGEABLE AUXILIARY UNIT AND METHOD OF USE THEREOF**

(71) Applicant: Instagrid GmbH, 71636 Ludwigsburg (DE)
(72) Inventor: Gutknecht, Philipp, Mönsheim (DE); Udelhoven, Thorsten, Benningen am Neckar (DE); Beck, Marlon, Rutesheim (DE)
(74) Representative: Eisenführ Speiser

(57) **Abstract**

A power supply system and method of charging an auxiliary energy storage element of a power supply system. The power supply system includes an auxiliary module with at least one auxiliary energy storage element, an input port operable to receive input electrical power from an external source, a power unit including a power module for providing electrical power, and a charging supply circuit for delivering charging power on a supply line, wherein the charging power is usable for charging the auxiliary energy storage element via the supply line. The charging supply circuit includes a first power converter electrically coupled to the input port and operable to convert the input electrical power to a first converted electrical power output and a second power converter electrically coupled to the power module and operable to convert the electrical power provided by the power module to a second converted electrical power output. Software products are also disclosed.

## Description

### BACKGROUND

### 1. Technical Field

This disclosure relates generally to aspects of electrical systems such as electrical power systems and, in some non-limiting embodiments, electrical systems that include an auxiliary battery unit that can be adaptively chargeable.

### 2. Technical Considerations

Mains electric power (e.g., power grid, utility power, domestic power, and/or the like) can be used to power many different types of electrical devices. However, mains electric power may not be readily available or accessible everywhere. For example, to provide electric power at sites lacking a fixed or reliable mains electric power connection, combustion engine-based generators may be used. Such generators can cause local air and noise pollution. Moreover, such generators can be unsuitable for certain applications such as operating in enclosed spaces with limited air circulation.

Power supplies based on electric batteries can be a more suitable alternative to generators, e.g., in terms of quiet operation and no exhaust gases. Power supplies based on electric batteries may include a power unit that includes one or more energy storage elements and one or more inverters for supplying electrical power stored in the one or more energy storage elements to a load. In some cases, an auxiliary unit, such as a startup circuit or module, may be used to control the operation of these power units.

These auxiliary units may themselves be powered by an auxiliary energy storage element (e.g., a rechargeable battery, capacitor or their likes) that resides within the auxiliary unit. It may be desirable to charge this auxiliary energy storage element so that it has the necessary power to operate and does not need to be periodically replaced, as would be the case if the auxiliary energy storage element is not rechargeable. To ensure the auxiliary batteries remain charged, it would be useful to supply the auxiliary batteries with power from, for example, the power unit. However, it may not be possible to charge the auxiliary battery if, for example, the power unit is not operational.

### SUMMARY

Accordingly, provided are improved electrical systems that include an auxiliary unit and energy storage element, methods of using such power electrical systems, including methods of using such electrical systems to charge the auxiliary energy storage element, and computer program products for operating such electrical systems (e.g., that overcome some or all of the deficiencies identified above).

In some configurations, for example, when a power unit is operating, the power unit can include a power module that can generate or supply power to charge the auxiliary energy storage element. By way of further example, the power unit and/or auxiliary unit may be connected to an external energy source, such as an AC mains energy source, and this external energy source may provide an alternative (or additional) source of power to charge the auxiliary energy storage element. Depending on the state of operation of the system, including whether power for charging the auxiliary energy storage element is available from one or both of the power module and the external energy source, the charging supply circuit responsible for providing charging power may receive different power levels for charging the auxiliary energy storage element. Accordingly, the charging supply circuit should be adaptable such that the charging power provided to the auxiliary energy storage element can vary depending upon the level of power provided to the charging supply circuit. Moreover, the power from the power source (e.g., the external source or the power unit) may need to be converted prior to being supplied to the auxiliary energy storage element, such as a conversion from AC power to DC power. The present teachings can provide a way to replenish charge on the auxiliary energy storage element as quickly as possible such that availability of the auxiliary energy storage element is improved. For example, when both external energy source and the power module are available for providing power, the auxiliary energy storage element can be charged more quickly. More generally, it can be ensured that whichever power source is available is utilized to replenish the auxiliary energy storage element. Hence, reliability and availability of the power unit or any system using the proposed teachings can be improved.

According to non-limiting embodiments or aspects, disclosed is a power supply system that can include an auxiliary module with at least one auxiliary energy storage element; an input port operable to receive input electrical power from an external source; a power unit having a power module for providing electrical power; and a charging supply circuit for delivering charging power on a supply line. The charging power may be usable for charging the auxiliary energy storage element. The charging supply circuit can include a first power converter electrically coupled to the input port and operable to convert the input electrical power to a first converted electrical power output and a second power converter electrically coupled to the power module and operable to convert the electrical power provided by the power module to a second converted electrical power output. The charging supply circuit can be adjustable between at least a first state and a second state. In the first state, the charging power delivered on the supply line may include at least a portion of the first converted electrical power output, and in the second state the charging power delivered on the supply line does not include any of the first converted electrical power output.

According to non-limiting aspects or embodiments, also disclosed is a method of charging an auxiliary energy storage element of a power supply system. The power supply system may include an auxiliary module with the auxiliary energy storage element; an input port; a power unit having a power module for providing electrical power; and a charging supply circuit that can include a first power converter and a second power converter. The method can include: receiving, via the input port, input electrical power from an external source; converting, via the first power converter, the input electrical power to a first converted electrical power output; generating, via the power module, electrical power; converting, via the second power converter, the electrical power generated by the power module to a second converted electrical power output; delivering on a supply line, via the charging supply circuit, charging power, wherein the charging power varies between at least a first amount and a second amount, wherein the first amount of charging power may include at least a portion of the first converted electrical power output and the second amount of charging power may not include any of the first converted electrical power output; and charging the auxiliary energy storage element via the charging power.

According to non-limiting aspects or embodiments, there can also be provided software products implementing any of the herein disclosed methods.

### BRIEF DESCRIPTION OF THE DRAWINGS

Fig. 1 is a schematic of an example power supply system including an example auxiliary module and an example power unit in accordance with some non-limiting embodiments or aspects of the present disclosure;
Fig. 2A is a detailed schematic of the example power unit in Fig. 1 in accordance with some non-limiting embodiments or aspects of the present disclosure;
Figs. 2B-2D are schematics of an example energy storage module of the power unit of Fig. 2A, according to some non-limiting embodiments or aspects of the present disclosure; and
Fig. 3 is a flow diagram of a method in accordance with some non-limiting embodiments or aspects of the present disclosure.

### DESCRIPTION

Various non-limiting embodiments will now be described with reference to the accompanying figures where like reference numbers correspond to like or functionally equivalent elements.

**As** used herein, spatial, or directional terms, such as "left", "right", "inner", "outer", "above", "below", and the like, relate to the disclosure as it is shown in the drawing figures. However, it is to be understood that the disclosure can assume various alternative orientations and, accordingly, such terms are not to be considered as limiting. Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure.

**At** the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

**As** used herein, "coupled", "coupling", and similar terms refer to two or more elements that are joined, linked, fastened, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

In this disclosure, the terms "electrical power system," "electrical system," "power supply," and "power supply system" may be used interchangeably. Those skilled in the art shall appreciate that the present teachings can be applied in such suitable systems without limitation of scope and generality of the present teachings.

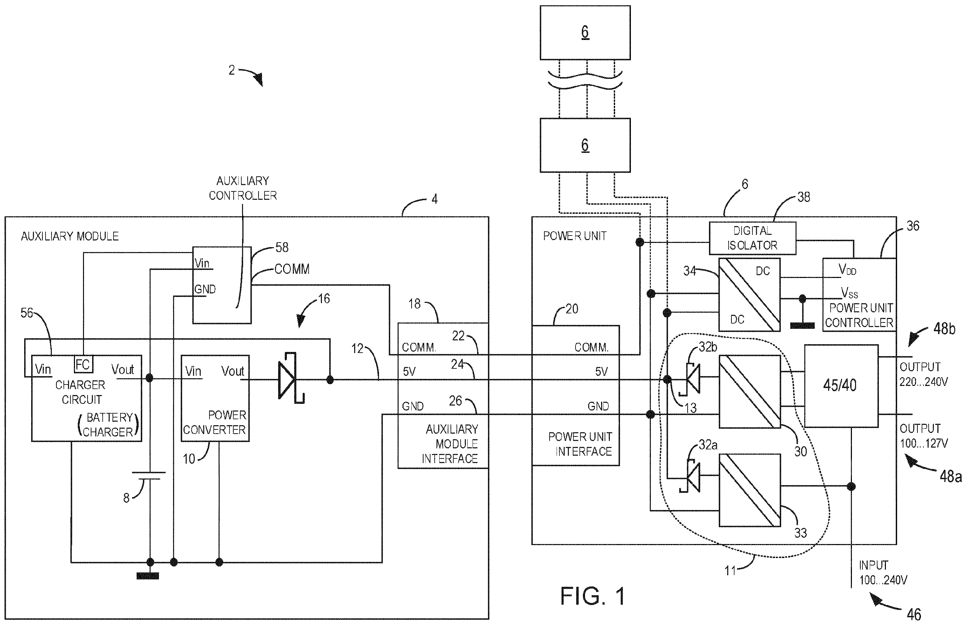

With reference to Fig. 1, in some non-limiting embodiments, a power supply system 2 in accordance with the principles of the present disclosure may include an auxiliary module 4 that may be coupled to one or more power units 6. In some non-limiting embodiments, the auxiliary module 4 may be, or it may comprise, a startup module that can provide electrical power to the one or more power units 6, such as when the one or more power units 6 are in an "off" state or otherwise have insufficient power to operate or perform basic control and communication functions. An example of such state can be when the system 2 is started (e.g., cold start). From that state, the power unit 6 itself would need to power up. It may be required to power up circuitry, e.g., controller 36, such that various parts of the power unit 6 are brought online (e.g., activated) to be operative. In such situations, auxiliary module 4 (such as in the form of a startup module) may provide electrical power the power unit 6, e.g., to establish basic functionality at least until the power unit 6 becomes self-sustaining (e.g., via an internal power module 40).

In some non-limiting embodiments, the auxiliary module 4 may include at least one auxiliary energy storage element 8, e.g., a rechargeable battery or capacitor, and a power converter 10 for delivering auxiliary power from the auxiliary energy storage element 8 to a supply node 12 via a power delivery control element 16, e.g., a Schottky diode or similar device that allows current to flow when sufficient forward voltage is applied and prevents or limits reverse leakage currents. The power delivery control element 16 may be coupled to the supply node 12 e.g., in a forward bias mode from a voltage terminal of the power converter 10. In an example, the power delivery control element 16 may be part of the power converter 10. The power delivery control element 16 may be operative for controlling the delivery of the auxiliary power from the power converter 10 to a supply node 12. Supply node 12 may be in electrical communication with supply line 24, as shown in Fig. 1, and in some non-limiting embodiments, supply node 12 may be part of supply line 24 such that supply line 24 comprises or includes power node 12 and power provided to supply node 12 (e.g., auxiliary power from the auxiliary energy storage element 8) is provided to and transferred on supply line 24. The power delivery control element 16 and charger circuit 56 (described below) need not be part of auxiliary module 4, and in some non-limiting embodiments, may be positioned elsewhere within power supply system 2 (e.g., as part of power unit 6).

In some non-limiting embodiments, the power converter 10 may be a boost converter (e.g., a DC-to-DC step-up converter) adapted to increase voltage, e.g., while decreasing current from its input (Vin) terminal to its output (Vout) terminal. By way of example, power converter 10 may be adapted to convert a nominal voltage at its input provided by the auxiliary energy storage element 8, e.g., 3.6 V, to an increased voltage at its output of, e.g., 5 volts. As will be described in further detail below, the voltage output by power converter 10 may be used to supply power to a power unit controller 36 of a power unit 6.

In some non-limiting embodiments, the auxiliary module 4 may include an auxiliary module interface 18 that may be coupled to a power unit interface 20 of one or more (e.g., each) power unit 6, directly or indirectly (e.g., through one or more intermediate power units 6 connected in series). In an example, the auxiliary module interface 18 and each power unit interface 20 facilitate the coupling or sharing of a communication channel, bus, or line 22 (e.g., a digital bus such as a controller area network bus (CAN-bus) or their likes), a supply line 24 (e.g., for transferring power), and a ground line 26 between the auxiliary module 4 and one or more (e.g., each) power unit 6.

The power supply system 2 may include one or more power units 6, the output (e.g., mains output) of these power units 6 may be connected in series and/or parallel to supply electrical power to a load. Each power unit 6 may also include at least one input 46, e.g. an AC mains input port, for receiving from an external source e.g., an external AC mains input, input electrical power, e.g., 110 volts and/or 220 volts, such as from a standard outlet connected to an electrical grid. Input 46 need not be physically part of power unit 6, and in some non-limiting embodiments, input 46 can be part of, e.g., auxiliary unit 4. Moreover, input 46 can receive input electrical power from various external sources in addition to an AC mains source. For example, input 46 can be configured to receive power from another power unit 6 or another power supply device.

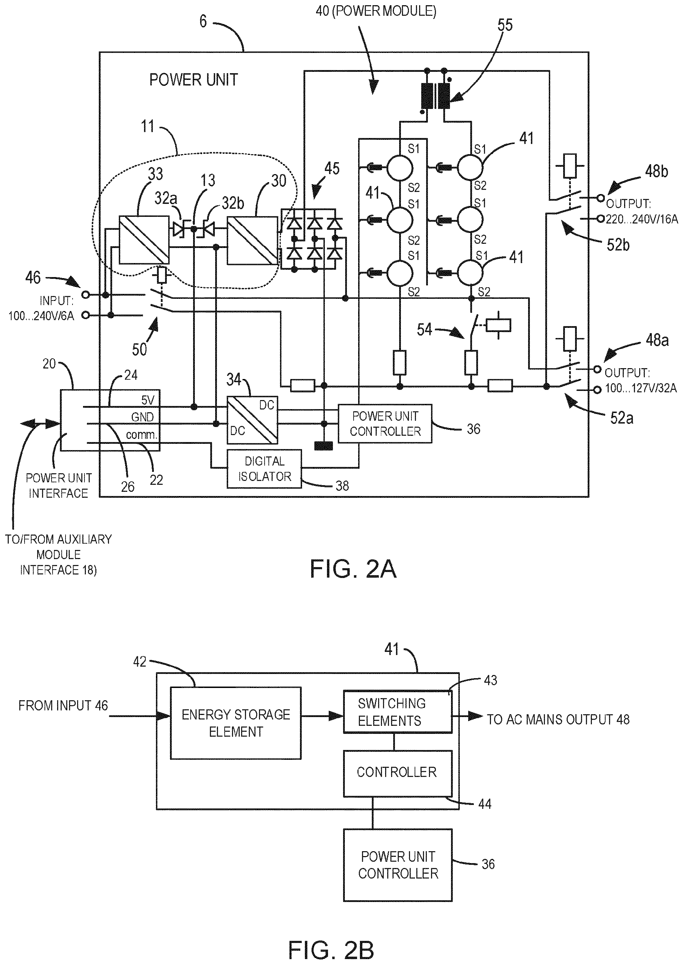

With reference Fig. 2A, and with continuing reference to Fig. 1, in some non-limiting embodiments, each power unit 6 may include a charging supply circuit 11. The charging supply circuit 11 can be operable to provide or deliver charging power on, e.g., supply line 24, where such charging power can be used to charge auxiliary energy storage element 8. Charging supply circuit 11 need not be part of power unit 6, and in some non-limiting embodiments, charging supply circuit 11, or certain components thereof, can be part of, e.g., auxiliary unit 4. Charging supply circuit 11 can include a first power converter 33, second power converter 30, and power supply node 13, which are described further below.

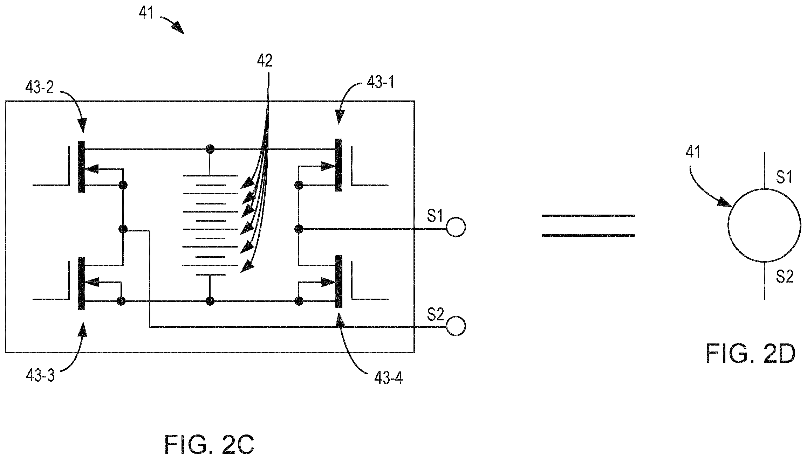

With reference Fig. 2A, and with continuing reference to Fig. 1, in some non-limiting embodiments, charging supply circuit 11 may include a first power converter 33 (or simply, first converter 33), e.g., an AC-DC converter, a DC-DC converter, or an AC-DC converter with an input rectifier on the AC input side, that is coupled to and is operative or configured for receiving electrical power from input 46, converting this power received from the input 46 (e.g., converting AC power to DC power or converting DC power at a first voltage to DC power at a second voltage), and delivering DC electrical power to or toward a power node 13, supply line 24, and/or ground line 26. For example, first converter 33 may be an AC-DC converter adapted to receive AC mains electrical power from input 46 and convert such input electrical power to e.g., a low voltage (e.g., 5 V) DC electrical power that is provided to supply node 13 which, in turn, is connected (directly or indirectly) to supply line 24. Power node 13 may be in electrical communication with supply line 24, as shown in Figs. 1 and 2, and in some non-limiting embodiments, power node 13 may be part of supply line 24 such that supply line 24 comprises or includes power node 13. As will be described in further detail below, this DC electrical power provided by first converter 33 over supply line 24 may constitute one source of power that can be used to charge auxiliary energy storage element 8.

With reference Fig. 2A, and with continuing reference to Fig. 1, in some non-limiting embodiments, charging supply circuit 11 may also include a second power converter 30 (or simply, second converter 30), e.g., an AC-DC converter, a DC-DC converter, or an AC-DC converter with an input rectifier on the AC input side, that is coupled to and is operative or configured for receiving electrical power provided by or from a power module 40 (described below) of the power unit 6, converting this power received by or from the power module 40 (e.g., converting AC power to DC power or converting DC power at a first voltage to DC power at a second voltage), and delivering DC electrical power to or toward a power node 13, supply line 24, and/or ground line 26. For example, second converter 30 may be an AC-DC converter adapted to receive AC electrical power from power module 40 and convert such electrical power to a low voltage (e.g., 5 V) DC electrical power that is provided to supply node 13 which, in turn, is connected (directly or indirectly) to supply line 24. As will be described in further detail below, this DC electrical power provided by second converter 30 may constitute a second (e.g., an additional or alternative) source of power that can also be used to charge auxiliary energy storage element 8.

Each of first converter 33 and second converter 30 may have an associated diode 32a-b, e.g., a Schottky diode, that may be coupled to an output of the converter 30/33 in a forward bias mode from a voltage terminal of the converter 30/33 to the power node 13. In an example, the diode 32a-b may be part of the converter 30/33, such as in the form of an AC-DC converter with a flyback topology. Figs. 1 and 2A depict this diode 32a-b as a Schottky diode, but this is shown just as a non-limiting example. In this configuration, diode 32a-b can direct a current (e.g. DC current) from an output voltage terminal of first converter 33 or second converter 30 toward supply node 13 and prevent reverse leakage.

In some non-limiting embodiments, the output voltage of first converter 33 and the output voltage of second converter 30 are the same or similar such that the voltage provided to supply node 13 and/or supply line 24 by each of first converter 33 and second converter 30 is the same, or approximately the same, such as at, or approximately, 5 volts. In some non-limiting embodiments, the output voltage of first converter 33 or second converter 30 may be converted or adjusted (e.g., lowered, raised) prior to reaching supply node 13 and/or supply line 24 by another power converter (not shown) or similar circuitry.

In some non-limiting embodiments, charging supply circuit 11, in operation, can be adjustable or adaptable between at least a first state and a second state, where the charging power (e.g., current and/or voltage) delivered by charging supply circuit 11 on supply line 24 varies or differs between at least the first state and the second state. As shown in Figs. 1 and 2A and as described above, charging supply circuit 11 can include a first converter 33 operative or configured for receiving electrical power from input 46 and converting this power to a first source of converted (e.g., DC) electrical power output that can be provided to supply line 24 (e.g., via power node 13) and a second converter 30 operative or configured for receiving electrical power from power module 40 and converting this power to a second source of converted (e.g., DC) electrical power output that can be provided to supply line 24 (e.g., via power node 13). Accordingly, charging supply circuit 11 has (at least) two potential sources of electrical power that can be provided on supply line 24. However, first converter 33 and second converter 30 may not both be configured or capable of providing converted electrical power at all times, and may be configured or capable of providing converted electrical power at different times and/or under different conditions. For example, if input 46 is not receiving input electrical power from an external source, such as if input 46 is disconnected (e.g., unplugged) from external source or if external source is not operational, then first converter 33 would not supply converted electrical power output to power node 13 and/or supply line 24. Similarly, second converter 30 may not supply converted electrical power output to power node 13 and/or supply line 24 if, for example, power module 40 is not operational or otherwise not providing electrical power to first converter 30.

Accordingly, the operational state of charging supply circuit 11 can vary between at least a first state, in which first converter 33 is providing converted electrical power to power node 13 and/or supply line 24, and a second state, in which first converter 33 is not providing converted electrical power to power node 13 and/or supply line 24. In either the first state or the second state, the second converter 30 may (or may not) be providing converted electrical power to power node 13 and/or supply line 24, depending on the operational status of power module 40 and/or second power converter 30. In this first state, the charging power provided by charging supply circuit 11 on supply line 24 can include (at least) a portion of the converted electrical power from first converter 33, and it may also include (at least) a portion of the converted electrical power from the second converter 30. However, in the second state, the charging power provided by charging supply circuit 11 on supply line 24 does not include converted electrical power from first converter 33, though it may include (at least) a portion of the converted electrical power from the second converter 30. In some non-limiting embodiments, the charging power delivered on supply line 24 by charging supply circuit 11 may be greater (e.g., have a higher current and/or voltage) when charging supply circuit 11 is in the first state (e.g., when the charging power includes at least a portion of the converted electrical power from the first converter 33) than when charging supply circuit 11 is in the second state (e.g., when the charging power does not include converted electrical power from the first converter 33). Accordingly, in the first state, there may be a larger power budget available for charging the auxiliary energy storage element 8 due to additional charging power provided on the supply line 24. However, depending on the operation and power output of power module 40, it may instead be the case that the charging power delivered on supply line 24 by charging supply circuit 11 may be greater (or the same) when charging supply circuit 11 is in the second state.

In some non-limiting embodiments, each power unit 6 may also include a DC-DC converter 34 coupled to the supply line 24 and the ground line 26. The DC-DC converter 34 of each power unit 6 may be operative or configured for converting a voltage level of DC power on the supply line 24 to a voltage level of DC power useable by a power unit controller 36 of the power unit 6. In some non-limiting embodiments, the DC-DC converter 34 may be electrically isolated such that it can connect a ground terminal of the power unit controller 36 to a common node. The supply line 24 may receive its electrical power from the first converter 33, second converter 30, power node 13, or supply node 12, whereupon the power unit controller 36 may be powered by the first converter 33 and/or the second converter 30, or by auxiliary power delivered from the auxiliary energy storage element 8 via the supply line 24. Each power unit 6 may also include a digital isolator 38 coupled in-line between a communication terminal of the power unit controller 36 and the communication channel or line 22 to convey data on communication channel 22 over an isolation barrier.

With reference to Figs. 2A-2D, and as mentioned above, in some non-limiting embodiments, each power unit 6 may include a power module 40. In some non-limiting embodiments, the power module 40 may include at least one energy storage module 41. A configuration with six energy storage modules 41 is shown in Fig. 2A. However, other configurations are also available, including a configuration in which 24 energy storage modules 41 are connected together.

In some non-limiting embodiments or aspects, energy storage module 41 may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, U.S. Provisional Patent Application No. 63/556,996, filed February 23, 2024, and/or European Patent Application No. 24161854.5, filed March 6, 2024 the disclosures of each of which are hereby incorporated by reference in their entireties.

In the example shown in Figs. 2B-2D, each energy storage module 41 may include at least one (e.g., six) energy storage component 42, e.g., a lithium battery cell and/or a super capacitor, and at least one switching element (e.g., first switching element 43-1, second switching element 43-2, third switching element 43-3, and/or fourth switching element 43-4, collectively referred to as "switching elements 43," and individually referred to as "switching element 43"), first electrical connection S1, and second electrical connection S2. In some non-limiting embodiments or aspects, switching elements 43 may be part of (e.g., integrated on, connected to, and/or the like) a module controller 44.

In some non-limiting embodiments or aspects, switching elements 43 may be switched (e.g., opened, closed, activated, deactivated, and/or the like) to selectively connect energy storage component(s) 42 to first electrical connection S1 and/or second electrical connection S2, e.g., to control a module voltage across first electrical connection S1 and second electrical connection S2. For example, switching elements 43 may be switched so that (1) first electrical connection S1 and second electrical connection S2 are both connected to negative side (e.g., DC minus) of energy storage component(s) 42, (2) first electrical connection S1 is connected to the negative side (e.g., DC minus) of energy storage component(s) 42 and second electrical connection S2 is connected to the positive side (e.g., DC plus) of energy storage component(s) 42, or (3) first electrical connection S1 is connected to the positive side (e.g., DC plus) of energy storage component(s) 42 and second electrical connection S2 is connected to the negative side (e.g., DC minus) of energy storage component(s) 42. As such, the voltage across first electrical connection S1 and second electrical connection S2 may be zero, negative, or positive, respectively.

For the purpose of illustration, and by way of example only, to connect both first electrical connection S1 and second electrical connection S2 to the negative side (e.g., DC minus) of energy storage component(s) 42, fourth switching element 43-4 and third switching element 43-3 may both be activated (e.g., closed, set to act as a closed switch, and/or the like), while second switching element 43-2 and first switching element 43-1 are deactivated (e.g., open, set to act as an open switch, and/or the like). To connect first electrical connection S1 to the negative side (e.g., DC minus) and connect second electrical connection S2 to the positive side (e.g., DC plus) of energy storage component(s) 42, fourth switching element 43-4 and second switching element 43-2 may be activated, while third switching element 43-3 and first switching element 43-1 are deactivated. To connect first electrical connection S1 to the positive side (e.g., DC plus) and second electrical connection S2 to the negative side (e.g., DC minus) of energy storage component(s) 42, first switching element 43-1 and third switching element 43-3 may be activated, and fourth switching element 43-4 and second switching element 43-2 may be deactivated. In other words, the switching elements 43 may be operated to be in states such as: a high-impedance (Hi-Z) state: in which all of the switching elements 43are deactivated; a bypass state: in which the low-side switching elements 43-3 and 43-4 are activated while the high-side switching elements 43-1 and 43-2 are deactivated; and two polarity states in which the energy storage component(s) 42 are connected between the first electrical connection S1 and the second electrical connection S2 in opposite polarity manner.

In some non-limiting embodiments or aspects, each switching element 43 may include at least one of a transistor (e.g., bipolar transistor, field-effect transistor (FET), metal-oxide-semiconductor field-effect transistor (MOSFET), and/or the like), a switch, a contactor, any combination thereof, and/or the like. The energy storage module 41 may include one or more driver circuits, such as a gate driver circuit, for driving each switching element 43. For example, the driver circuits may be part of (e.g., integrated on, connected to, and/or the like) module controller 44.

In some non-limiting embodiments or aspects, each switching element 43 may be driven, or controlled, via a module controller 44 or by power unit controller 36 which may control switching element 43 directly or provide commands to module controller 44. For example, module controller 44 may control the switching elements 43 to selectively connect energy storage component(s) 42 to first electrical connection S1 and/or second electrical connection S2, as described herein. For example, module controller 44 may be connected to each switching element 43 in order to drive, or optionally control, such switching element 43. In some non-limiting embodiments or aspects, the module controller 44 provides signals to the gate driver circuit for driving the switching elements 43.

For purposes of other figures herein, each energy storage module 41 may be represented by the symbol shown in Fig. 2D.

Each energy storage module 41 may also include a module controller 44 that is programmed or configured to control the operation of the switching elements 43 to output the AC output power in response to command(s) from the power unit controller 36. Module controller 44 may include first level battery management system data acquisition circuitry that allows the power unit controller 36 to read relevant battery parameters and/or general-purpose input/output options that can be set and read by the power unit controller 36.

In some non-limiting embodiments or aspects, power unit controller 36 may include a controller and associated circuitry. For example, power unit controller 36 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, power unit controller 36 may be communicatively connected to energy storage module(s) 41 (e.g., module controller(s) 44 thereof) by a communication connection.

In some non-limiting embodiments or aspects, power unit controller 36 may command module controller(s) 44 of energy storage module(s) 41 to generate an output voltage based on a combination (e.g., sum and/or the like) of the respective module voltage of each respective energy storage module 41, as described herein. For example, by sequentially connecting multiple energy storage module(s) 41 in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, and/or the like) and/or a target frequency (e.g., a frequency substantially equal to the nominal frequency of mains electric power, such as 60 Hz, 50 Hz, and/or the like), as described herein.

In some non-limiting embodiments or aspects, power unit controller 36 may command module controller(s) 44 of energy storage module(s) 41 to cause a respective duty cycle of a respective module voltage of each respective energy storage module 41 to generate an output voltage based on a combination (e.g., sum and/or the like) of the respective module voltage of each respective energy storage module 41, as described herein. For example, by modulating the duty cycle differently for multiple energy storage module(s) 41 connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, power unit controller 36 may command module controller(s) 44 of energy storage modules 41 to switch their output voltage with certain frequency and/or duty-cycle. The exact number or range of the switching frequency is not essential to the scope or generality of the teachings of the present disclosure. Various energy storage modules 41 may be orchestrated, e.g., by power unit controller 36, to generate an output voltage based on a combination of the respective module voltage of each respective energy storage module 100, as described herein. As such, voltage from the individual energy storage modules 41 (e.g., DC voltage) may be converted to suitable output voltages (e.g., AC voltages suitable for electrical devices designed to be connected to mains electric power in different regions).

As mentioned above, each power unit 6 may also include at least one input 46, e.g., AC mains input, for receiving from an external source, e.g., AC mains, input electrical power, e.g., 110 volts. This input electrical power may be used for charging the energy storage components(s) 42 of the energy storage module 41 and, as mentioned above, for charging the auxiliary energy storage element 8 via the first converter 33 and the supply line 24. Each power unit 6 may also include at least one AC mains output 48 for providing the AC output power output by the energy storage module(s) 41 of the power module 40 to a load. In an example, the power module 40 may include the six energy storage modules 41 shown in Fig. 2A that may be programmed or configured to cooperate under the control of the power unit controller 36, to output AC output power to the load.

In some non-limiting embodiments, second converter 30 may have a wide-range, input, e.g., between 85 V AC and 264 V AC, and a low voltage (e.g., 5 V DC) output that may be isolated from its input. Second converter 30 may be coupled to the power module 40 via a rectifier 45 and configured such that the second converter 30 is active regardless of whether voltage selection switch 54 (described below) is set to a closed state or an open state. As depicted in Fig. 2A, the rectifier 45 may be comprised of six diodes. In some non-limiting embodiments, second converter 30 may include an internal rectifier bridge, thereby allowing second converter 30 to be operated from pulsating DC current.

As mentioned above, the input electrical power from input 46 may also be used for charging the auxiliary energy storage element 8 via first converter 33 and the supply node 12. In some non-limiting embodiments, first converter 33 may be similar or identical to second converter 30. First converter 33 may have a wide-range, input, e.g., between 85 V AC and 264 V AC, and a low voltage (e.g., 5 V DC) output that may be isolated from its input. In some non-limiting embodiments, the first converter 33 may include an internal rectifier bridge, thereby allowing the first converter 33 to be operated from pulsating DC current.

In some non-limiting embodiments, each power unit 6 may include an input switch 50 that may be switched, e.g., under the control of the power unit controller 36, between a closed state and an open state for coupling and decoupling the input 46 to and from the power module 40. When the input switch 50 is in the closed state, the energy storage component(s) 42 of each energy storage module(s) 41 may be charged, via the AC mains input 46, from an external mains source. When the input switch 50 is in an open state, the power module 40 is isolated from the input 46.

In some non-limiting embodiments, each power unit 6, may include an output switch 52 that may be switched, e.g., under the control of the power unit controller 36, between a closed state and an open state for coupling and decoupling the AC mains output 48 to and from the power module 40. When the output switch 52 is in the closed state, mains AC output power may be provided from the energy storage component(s) 42 and the switching element(s) 43 of the energy storage module(s) 41 of the power module 40 to a load via the AC mains output 48. When the output switch 52 is in an open state, the power module 40 is isolated from the AC mains output 48.

In some non-limiting embodiments, each power unit 6 may include first and second AC mains outputs 48a and 48b for providing, from the power module 40, different voltages of mains output power via first and second output switches 52a and 52b. In an example, first output switch 52a in a closed state may provide from the power module 40 an output voltage between 100 volts and 127 volts to an external load via mains output 48a. When the output switch 52a is in an open state, the power module 40 may be isolated from the mains output 48a. In another example, output switch 52b in a closed state may provide from the power module 40 an output voltage between 220 volts and 240 volts to an external load via mains output 48b. When the output switch 52b is in an open state, the power module 40 may be isolated from the mains output 48b. The output switches 52a and 52b may be controlled, e.g., the power unit controller 36, whereupon only one output switch 52a and 52b at a time may be in a closed state.

In some non-limiting embodiments, each power unit 6 may include the power module 40 including, in this example, a plurality of energy storage modules 41 and a voltage selection switch 54 that may be operated, e.g., under the control of the central controller 36, for selectively connecting the plurality of energy storage modules 41 in series or a parallel. In an example, voltage selection switch 54 may be set or switched to a closed state whereupon the energy storage modules 41 on the left in Fig. 2A are connected in parallel with the energy storage modules 41 on the right in Fig. 2A, whereupon the energy storage modules 41 in Fig. 2A are connected to provide an output voltage, e.g., between 100 volts and 127 volts to an external load via the mains output 48a when output switch 52a is in a closed state. In another example, voltage selection switch 54 may be set or switched to an open state whereupon the energy storage modules 41 on the left in Fig. 2A are connected in series with the energy storage modules 41 on the right in Fig. 2A, whereupon the plurality of energy storage modules 41 in Fig. 2A are connected to provide an output voltage, e.g., between 220 volts and 240 volts to an external load via the mains output 48b when output switch 52b is in a closed state.

It shall be appreciated that specifying a particular mains electric power frequency is not essential to the scope and generality of the teachings of the present disclosure, as different frequencies as desired can be implemented by driving the energy storage modules 41 as required. As an example, the 110 V AC may be delivered at or around 60 Hz frequency (e.g., as common in the United States). However, it is also possible to deliver 110 V AC at other frequencies, such as 50 Hz. As another example, the AC frequency may be at or around 50 Hz (e.g., as common in Europe). However, it is also possible to deliver 220 V AC at other frequencies, such as 60 Hz.

In some non-limiting embodiments or aspects, each switch described in this disclosure may include at least one of a switch, a contactor, any combination thereof, and/or the like. For example, each switch may include at least one of a single pole single throw (SPST) switch, a double pole double throw (DPDT) switch, a single pole double throw (SPDT) switch, a double pole single throw (DPST) switch, any combination thereof, and/or the like.

In some non-limiting embodiments or aspects, a choke 55 may be connected to first set of energy storage modules 41 (e.g., the three energy storage modules 41 on the left hand side) and second set of energy storage modules 41 (e.g., the three energy storage modules 41 on the right hand side). For example, as shown in Fig. 2A, choke 55 may be connected to first electrical connection S1 of one energy storage module 41 of the first set and to first electrical connection S1 of one energy storage module 41 of the second set.

In some non-limiting embodiments or aspects, choke 55 may include a first winding (e.g., a first inductor), a second winding (e.g., a second inductor), and a core (e.g., a toroidal core). In some non-limiting embodiments or aspects, the first winding of choke 55 may be connected to first set (e.g., the left hand side) of energy storage modules 41. Additionally or alternatively, the second winding of choke 55 may be connected to second set (e.g., the right hand side) of energy storage modules 41. In some non-limiting embodiments or aspects, choke 55 may be in the form of a center-tapped inductor. For example, choke 55 may include a connection such that the choke is between first set and second set of energy storage modules 41 when first set and second set are in series.

Choke 55 may be configured such that there is reduced (e.g., little or no) inductive impedance to load currents through the first and second sets of energy storage modules 41, and thus no, or significantly reduced, impedance to the combined load current (e.g., the total load current). For example, a first magnetic flux of the first winding caused by a first load current through a first set of energy storage modules 41 may combine subtractively with a second magnetic flux of the second winding caused by a second load current through a second set of energy storage modules 41. It shall be appreciated that the total load current in this case may be a combination (e.g., sum) of the first load current and the second load current.

Additionally, choke 55 may impede a loop (e.g., circular) current which may sometimes flow between the first and second sets of energy storage modules 41. Such a loop current may arise, e.g., from a mismatch between the first and second sets of energy storage modules 41. For example, due to a mismatch between the energy storage modules 41 of the two sets, a loop current may tend to flow between the first set and the second set, and the direction of the flow of the loop current may depend upon the relative mismatch between the first and second sets. In other words, it may happen that one of the two sets of energy storage modules 41 is generating slightly higher voltage than the other and/or slightly higher current than the other. In such cases, a loop current (e.g., proportional to this voltage difference and/or current different) may tend to flow from the set producing a higher voltage and/or current towards the other set producing a lower voltage and/or current. The choke 55 may impede such loop current by reacting to the difference in current (e.g., caused by a difference of voltages) between the first set and the second set. Thus, the combined load current can flow essentially inductively unimpeded through the choke 55, while the loop current is inductively impeded.

Referring back to Fig. 1 and with continuing reference to Figs. 2A and 2B, as described above, the auxiliary module 4 may comprise at least one auxiliary energy storage element 8 and the power converter 10 for delivering auxiliary power from the auxiliary energy storage element 8 to the supply line 24 (e.g., via supply node 12). In some non-limiting embodiments, the auxiliary module 4 may also include a charging circuit 56, e.g., a battery charging circuit or a battery charger, operative for charging the auxiliary energy storage element 8 by receiving charging power via the supply node 12 and supply line 24. As depicted in Fig. 1, charging circuit 56 can receive charging power at a voltage input (Vin) terminal via a connection with supply node 12 and/or supply line 24. Charging circuit 56 may further include a voltage output (Vout) terminal at which output charge power is provided to, e.g., auxiliary energy storage element 8 where such power can be used to charge auxiliary energy storage element 8. Without limitation to scope or generality of the present teachings, the terms "charging circuit", "battery charging circuit", and "battery charger" may be used interchangeably in the present disclosure to refer to the charging circuit 56.

As described above, the operational state of charging supply circuit 11 can vary between at least a first state, in which first converter 33 is providing converted electrical power to power node 13 and/or supply line 24, and a second state, in which first converter 33 is not providing converted electrical power to power node 13 and/or supply line 24. As such, the charging power delivered on supply line 24 by charging supply circuit 11, and thus the charging power provided to Vin of battery charging circuit 56, may be greater (e.g., have a higher current and/or voltage) when charging supply circuit 11 is in the first state (e.g., when the charging power includes at least a portion of the converted electrical power from the first converter 33) than when charging supply circuit 11 is in the second state (e.g., when the charging power does not include converted electrical power from the first converter 33). Charging circuit 56 may be configured or operable to adjust its mode of operation between at least a first state and a second state, where the first state and second state of charging circuit 56 correspond to the respective first state and second state of charging supply circuit 11. In some non-limiting embodiments, battery charging circuit 56, when in the first state, can receive via supply node 12 and/or supply line 24 charging power that includes (at least) a portion of the converted electrical power from first converter 33 and can output, at Vout, a first amount of output charge power (e.g., to the auxiliary energy storage element 8). In some non-limiting embodiments, charging circuit 56, when in the second state, can receive via supply node 12 and/or supply line 24 charging power that does not include converted electrical power from first converter 33 and can output, at Vout, a second amount of output charge power (e.g., to the auxiliary energy storage element 8). Consistent with the discussion above concerning charging supply circuit 11, the charging power received by charging circuit 56 in either the first state or the second state may include (at least) a portion of the converted electrical power from the second converter 30.

In some non-limiting embodiments, because the charging power delivered on supply line 24 by charging supply circuit 11 may be greater (e.g., have a higher current and/or voltage) when charging supply circuit 11 is in the first state (e.g., when the charging power includes at least a portion of the converted electrical power from the first converter 33) than when charging supply circuit 11 is in the second state (e.g., when the charging power does not include converted electrical power from the first converter 33), battery charging circuit 56 may receive a greater amount of charging power when in the first state. Therefore, there may be a larger power budget available for charging the auxiliary energy storage element 8 when battery charging circuit 56 is in the first state, and battery charging circuit 56 may be configured to deliver, at Vout, a higher amount (e.g., greater current and/or voltage) of output charge power when battery charging circuit 56 is in the first state. In some non-limiting embodiments, this first state of battery charging circuit 56 may be considered or referred to as a "fast charge," or "FC" mode of operation because it allows for a greater amount of energy to be provided to auxiliary energy storage element in a shorter amount of time (e.g., the auxiliary energy storage element 8 can be charged faster). When in the second state, battery charging circuit 56 may be configured to deliver, at Vout, a second amount of output charge power, and this second amount of output charge power may be lesser (e.g., lower current and/or voltage) than the first amount of output charge power that is delivered when battery charging circuit 56 is in the first state, causing auxiliary energy storage element 8 to charge slower than when battery charging circuit 56 is in the first (e.g., fast charge) state. For example, the current at Vout of the battery charging circuit 56 in the first state may be 500 mA while the current at Vout of the battery charging circuit 56 in the second state may be less than 500 mA, such as 200 mA or 300 mA. However, depending on the operation of power module 40 and charging supply circuit 11, the second amount of output charge power at Vout of battery charging circuit 56 may approach, be the same as, or even exceed the first amount of output charge power, in some non-limiting embodiments.

**As** mentioned above, auxiliary unit 4 may include auxiliary controller 58 which may be powered via the auxiliary energy storage element 8. The auxiliary controller 58 may manage the function of charger circuit 56, including those functions discussed above. For example, auxiliary controller 58 may configure or adjust charger circuit 56 between the first state (e.g., fast charge mode) and second state. As depicted in Fig. 1, auxiliary controller 58 may be in communication with a FC terminal of charger circuit 56. When the FC terminal of charging circuit 56 is asserted, such as upon generation of a FC signal by auxiliary controller 58 and communication of the FC signal to the FC terminal of charging circuit 56, charging circuit 56 may be configured to operate in the first state (e.g., fast charge mode). However, when FC terminal is not asserted, such as in the absence of a FC signal being present at FC terminal, charger circuit 56 may be configured to operate in the second state. Alternatively, charger circuit 56 could be configured into a fast charge state (e.g., through software, e.g., contained within charger circuit 56). Such software could be controlled and/or adjusted via a computing device connected via an auxiliary connection (e.g., I2C or SPI) to charger circuit 56. Programming instructions contained within auxiliary controller 58 and/or charger circuit 56 could be modified via this connection by setting configuration bits.

Auxiliary controller 58 may generate a FC signal upon sensing or receiving a signal from power unit 6, e.g., from power unit controller 36, indicating that first converter 33 is operational and generating first converted electrical power. Power unit controller 36 may communicate this signal to auxiliary controller 58 over communication line 22. This signal may be generated by power unit controller 36 if, for example, power from an external source is sensed at input 46 and/or if first converter 33 indicates, such as through a signal generated at first converter 33 or diode 32a, that first converter 33 has received input electrical power from an external source and/or has output first converted power. Power unit controller 36 may alternatively signal to auxiliary controller 58 to assert FC mode if, for example, the power level at power node 13 and/or on supply line 24 reaches or exceeds a threshold value. Alternatively, auxiliary controller 58 may generate a FC signal if, for example, the power level at supply node 12 and/or on signal line 24 reaches or exceeds a threshold value, as determined by a sensor in electrical communication with supply node 12 and/or supply line 24, such as a sensor positioned at supply node 12 and/or within power delivery control element 16.

As described above, the power delivery control element 16 may be operative for controlling the delivery of the auxiliary power from the auxiliary energy storage element 8 to the supply node 12. Power delivery control element 16 may also include a current sensor or current sensing circuit (not shown). Current sensor may be operative for sensing a presence of the auxiliary supply current flowing from the output of the power converter 10 toward the supply node 12 via the power delivery control element 16. In response to the current sensor sensing the auxiliary supply current, the battery charging circuit 56 may be disabled via a disable terminal of the charging circuit 56. Disabling the charging circuit 56 may prevent generation of a local energy loop within the startup module 4 in which energy from the auxiliary energy storage element 8 is circulated through power converter 10 and charging circuit 56 and returned to auxiliary energy storage element 8.

In some non-limiting embodiments, the power unit 6 may comprise the DC-DC converter 34 for powering the power unit controller 36 with power supplied either by the first converter 33 or second converter 30 or with auxiliary power from the auxiliary energy storage element 8 via the supply node 12, such as when the first converter 33 and second converter 30 are not operational or are not supplying sufficient power to the power unit controller 36. For example, if the power unit 6 ceases generating an AC waveform due to, e.g., an emergency stop, the second converter 30 would no longer supply energy to the power unit controller 36, and if no external power source is connected to input 46, first converter 33 would no longer supply energy to the power unit controller 36. However, it may still be desired to allow the power unit controller 36 to remain operational for some amount of time in order to extract or provide data for debugging/servicing of the power unit 6, and the necessary power can be supplied from the auxiliary energy storage element 8 via the supply node 12 and supply line 24. In some non-limiting embodiments, the auxiliary module 4 and auxiliary controller 58, which may be powered via the auxiliary energy storage element 8, may provide control and other signals to the power unit 6.

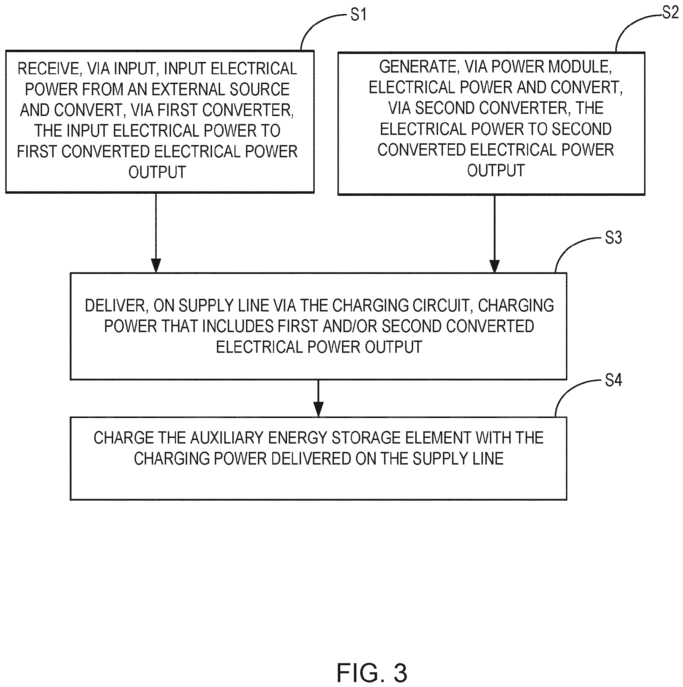

With reference to Fig. 3 and with continuing reference to Figs. 1-2D, in some non-limiting embodiments, a method of charging an auxiliary energy storage element 8 of an auxiliary module 4 in a power supply system 2 that includes a charging supply circuit 11 with a first converter 33 and second converter 33 may include a step S1: receiving, via the input 46 (e.g., an input port), input electrical power from an external source (e.g., AC input electrical power from an external AC mains source), and converting, via first converter 33 (e.g., an AC-DC power converter), the input electrical power received via the input 46 to first converted electrical power output (e.g, DC power).

With continued reference to Fig. 3, in some non-limiting embodiments, the method may also include a step S2: generating, via the power module 40 of the power unit 6 (e.g., a power module 40 that includes one or more energy storage elements 41 and an inverter circuit), electrical power (e.g., AC electrical power) and converting, via second converter 30 (e.g., an AC-DC power converter), the electrical power provided by power module 40 to second converted electrical power (e.g., DC power). In some non-limiting embodiments, steps S1 and S2 can be performed in any order, and may be performed simultaneously.

With continued reference to Fig. 3, in some non-limiting embodiments, the method may also include a step S3: delivering on supply line 24, via the charging supply circuit 11, charging power. The charging power delivered on supply line 24 may vary between at least a first amount and a second amount. The first amount of charging power may include at least a portion of the converted electrical power from the first converter 33 and the second amount of charging power may not include any of the converted electrical power from the first converter 33. In some non-limiting embodiments, the first amount of charging power and/or the second amount of charging power may include at least a portion of the converted electrical power from the second converter 30. In some non-limiting embodiments, the first amount of charging power may be greater (e.g., higher current and/or voltage) than the second amount of charging power. The first amount of charging power may be provided when the charging supply circuit 11 is in the first state, as described above, and the second amount of charging power may be provided when the charging supply circuit 11 is in the second state, as described above.

With continued reference to Fig. 3, in some non-limiting embodiments, the method may also include a step S4: charging the auxiliary energy storage element 8 with the charging power supplied over supply line 24. In some non-limiting embodiments, the auxiliary energy storage element 8 may be charged by charging circuit 56 which, as described above, can receive charging power via supply line 24. Charging circuit 56 can receive charging power via supply line 24 and can provide output charge power which can be used to charge auxiliary energy storage element 8. In some non-limiting embodiments, charging circuit 56 may be part of auxiliary module 4. In some non-limiting embodiments, the output charge power provided by battery charging circuit 56 may vary or change between at least a first amount of output charge power and a second amount of output charge power, and the first amount of output charge power may be greater than the second amount of output charge power. In some non-limiting embodiments, auxiliary module 4 can include an auxiliary controller 58 that can configure or control battery charging circuit 56 to provide either the first amount of output charge power or the second amount of output charge power. For example, auxiliary controller 58 may control or configure battery charging circuit 56 to deliver (e.g., at Vout) the first amount of output charge power when the first amount of charging power is provided on the supply line 24 (e.g., when charging supply circuit 11 is in the first state, as described above) and to deliver (e.g., at Vout) the second amount of output charge power when the second amount of charging power is provided on the supply line 24 (e.g., when charging supply circuit 11 is in the second state, as described above).

By charging the auxiliary energy storage element 8 in this manner, the auxiliary energy storage element 8 is able to charge faster when additional charging power is available, thereby allowing auxiliary energy storage element 8 to maintain and more quickly replenish a supply of electrical power that can be used for powering the auxiliary controller 58 for a longer period when the power unit 6 is off or not working. An advantage of this may be that the auxiliary controller 58 is powered and fully operational when the power unit 6 transitions from an off or not working state or an on or working state whereupon the auxiliary controller 58 is able to more quickly and readily control the operation of the power unit 6 via the power unit controller 36 of the power unit 6. This may be particularly advantageous where the auxiliary controller 58 is controlling and/or synchronizing the operation of a number of power units 6 connected in series or parallel via the power unit controllers 36 of these power units 6.

**To** summarize, there are disclosed electrical systems with adaptively chargeable auxiliary unit and related aspects thereof. More specifically, there are disclosed power supply system and method of charging an auxiliary energy storage element of a power supply system. The power supply system includes an auxiliary module with at least one auxiliary energy storage element, an input port operable to receive input electrical power from an external source, a power unit including a power module for providing electrical power, and a charging supply circuit for delivering charging power on a supply line, wherein the charging power is usable for charging the auxiliary energy storage element via the supply line. The charging supply circuit includes a first power converter electrically coupled to the input port and operable to convert the input electrical power to a first converted electrical power output and a second power converter electrically coupled to the power module and operable to convert the electrical power provided by the power module to a second converted electrical power output. Software products implementing any of the herein disclosed methods are also disclosed.

Other non-limiting examples or aspects are set forth in the following illustrative and exemplary numbered clauses:
Clause 1: Disclosed is a power supply system comprising an auxiliary module, comprising at least one auxiliary energy storage element (e.g., battery, capacitor, super capacitor, their likes or any of their combination); an input port operable to receive input electrical power from an external source; a power unit comprising a power module for providing electrical power (e.g., AC power); and a charging supply circuit for delivering charging power on a supply line. The charging power is usable for charging the auxiliary energy storage element. The charging supply circuit comprises a first power converter electrically coupled to the input port and operable to convert the input electrical power to a first converted electrical power output; and a second power converter electrically coupled to the power module and operable to convert the electrical power provided by the power module to a second converted electrical power output. The charging supply circuit is adjustable between at least a first state and a second state. In the first state, the charging power delivered on the supply line comprises at least a portion of the first converted electrical power output and in the second state the charging power delivered on the supply line does not comprise any of the first converted electrical power output.
Clause 2: the system of clause 1, wherein the input port and/or the charging supply circuit are part of the power unit.
Clause 3: the system of clause 1 or 2, wherein the input port is operable to receive AC input electrical power from an external AC mains source.
Clause 4: The system of any clause 3, wherein the first power converter is an AC-DC power converter operable to convert the AC input electrical power to the first converted electrical power output, and wherein the first converted electrical power output is DC power.
Clause 5: The system of any one of clauses 1-4, wherein the power module comprises an energy storage element and an inverter for providing AC electrical power.
Clause 6: The system of clause 5, wherein the second power converter is an AC-DC power converter operable to convert the AC electrical power to the second converted electrical power output, and wherein the second converted electrical power output is DC power.
Clause 7: The system of any one of clauses 1-6, wherein in the second state the charging power delivered on the supply line comprises at least a portion of the second converted electrical power output.
Clause 8: The system of any one of clauses 1-7, wherein the charging power delivered in the first state is greater than the charging power delivered in the second state.
Clause 9: The system of any one of clauses 1-8, further comprising a charger circuit (e.g., a battery charger circuit), wherein the charger circuit receives charging power from the supply line and provides an output charge power to the auxiliary energy storage element (e.g., battery).
Clause 10: The system of clause 9, wherein the charger circuit (e.g., the battery charger circuit) is part of the auxiliary module.
Clause 11: The system of clause 9 or 10, wherein the charger circuit (e.g., the battery charger circuit) is adapted to provide a first amount of output charge power to the auxiliary storage element when the charger circuit is in a first state and provide a second amount of output charge power to the auxiliary storage element when the charger circuit is in a second state, wherein the first amount of output charge power is greater than the second amount of output charge power.
Clause 12: The system of clause 11, wherein the auxiliary module further comprises an auxiliary controller, wherein the auxiliary controller is operable to configure the charger circuit (e.g., the battery charger circuit) between the first state and the second state.
Clause 13: The system of clause 11 or 12, wherein, the auxiliary controller is operable to configure the charger circuit (e.g., the battery charger circuit) into the first state when the charging supply circuit is in the first state and to configure the charger circuit into the second state when the charging supply circuit is in the second state.
Clause 14: The system of any of clauses 1-13, wherein the power unit comprises a DC-DC converter for powering a power unit controller of the power unit with power supplied via the charging circuit.
Clause 15: Disclosed is a method of charging an auxiliary energy storage element of a power supply system. The power supply system comprises an auxiliary module, comprising the auxiliary energy storage element (e.g., battery, capacitor, super capacitor, their likes or any of their combination); an input port; a power unit comprising a power module for providing electrical power (e.g., AC power); and a charging supply circuit comprising a first power converter and a second power converter. The method comprises: receiving, via the input port, input electrical power from an external source; converting, via the first power converter, the input electrical power to a first converted electrical power output; generating, via the power module, electrical power; converting, via the second power converter, the electrical power generated by the power module to a second converted electrical power output; delivering on a supply line, via the charging supply circuit, charging power, wherein the charging power varies between at least a first amount and a second amount, wherein the first amount of charging power comprises at least a portion of the first converted electrical power output and the second amount of charging power does not comprise any of the first converted electrical power output; and charging the auxiliary energy storage element via the charging power.
Clause 16: The method of clause 15, wherein the input electrical power received via the input port is AC input electrical power from an external AC mains source.
Clause 17: The method of clause 16, wherein the first power converter is an AC-DC power converter and the first converted electrical power output is DC power.
Clause 18: The method of any clauses 15-17, wherein the power module comprises an energy storage element and an inverter for generating AC electrical power.
Clause 19: The method of clause 18, wherein the second power converter is an AC-DC power converter and the second converted electrical power output is DC power.
Clause 20: The method of any of clauses 15-19, wherein the second amount of charging power delivered on the supply line comprises at least a portion of the second converted electrical power output.
Clause 21: The method of any of clauses 15-20, wherein the first amount of charging power is greater than the second amount of charging power.
Clause 22: The method of any of clauses 15-21, wherein the system further comprises a charger circuit (e.g., battery charger circuit), and wherein the method further comprises receiving, by the charger circuit, the charging power from the supply line and providing, by the charger circuit, an output charge power to the auxiliary energy storage element.
Clause 23: The method of clause 22, wherein the charger circuit (e.g., the battery charger circuit) is part of the auxiliary module.
Clause 24: The method of clause 22 or 23, wherein the output charge power varies between a first amount of output charge power and a second amount of output charge power, wherein the first amount of output charge power is greater than the second amount of output charge power.
Clause 25: The method of clause 24, further comprising, controlling, via an auxiliary controller, the charger circuit (e.g., the battery charger circuit) to provide either the first amount or the second amount of output charge power.
Clause 26: The method of clause 25, further comprising, controlling, via the auxiliary controller, the charger circuit (e.g., the battery charger circuit) to deliver the first amount of output charge power when the first amount of charging power is provided on the supply line and to deliver the second amount of output charge power when the second amount of charging power is provided on the supply line.
Clause 27: A system comprising means to perform the steps of any of the above methods.
Clause 28: A computer program product comprising computer-executable instructions for causing a system (e.g., an auxiliary controller and/or power unit controller) to collectively perform or cause to be performed any of the above methods (e.g., steps of any of the above method clauses).

Although this disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

## Claims

1. A method of charging an auxiliary energy storage element of a power supply system, wherein:
the power supply system comprises:
an auxiliary module, comprising the auxiliary energy storage element;
an input port;
a power unit comprising a power module for providing electrical power; and
a charging supply circuit comprising a first power converter and a second power converter,
the method comprising:
receiving, via the input port, input electrical power from an external source;
converting, via the first power converter, the input electrical power to a first converted electrical power output;
generating, via the power module, electrical power;
converting, via the second power converter, the electrical power generated by the power module to a second converted electrical power output;
delivering on a supply line, via the charging supply circuit, charging power, wherein the charging power varies between at least a first amount and a second amount, wherein the first amount of charging power comprises at least a portion of the first converted electrical power output and the second amount of charging power does not comprise any of the first converted electrical power output; and
charging the auxiliary energy storage element via the charging power.

2. The method of claim 1, wherein the input electrical power received via the input port is AC input electrical power from an external AC mains source.

3. The method of claim 2, wherein the first power converter is an AC-DC power converter and the first converted electrical power output is DC power.

4. The method of any of the claims 1-3, wherein the power module comprises an energy storage element and an inverter for generating AC electrical power.

5. The method of claim 4, wherein the second power converter is an AC-DC power converter and the second converted electrical power output is DC power.

6. The method of any of the claims 1-5, wherein the second amount of charging power delivered on the supply line comprises at least a portion of the second converted electrical power output.

7. The method of any of the claims 1-6, wherein the first amount of charging power is greater than the second amount of charging power.

8. The method of any of the claims 1-7, wherein the system further comprises a charger circuit, and wherein the method further comprises receiving, by the charger circuit, the charging power from the supply line and providing, by the charger, an output charge power to the auxiliary energy storage element.

9. The method of claim 8, wherein the charger circuit is part of the auxiliary module.

10. The method of claim 8 or 9, wherein the output charge power varies between a first amount of output charge power and a second amount of output charge power, wherein the first amount of output charge power is greater than the second amount of output charge power.

11. The method of claim 10, further comprising, controlling, via an auxiliary controller, the charger circuit to provide either the first amount or the second amount of output charge power.

12. The method of claim 11, further comprising, controlling, via the auxiliary controller, the charger circuit to deliver the first amount of output charge power when the first amount of charging power is provided on the supply line and to deliver the second amount of output charge power when the second amount of charging power is provided on the supply line.

13. A system comprising means to perform the steps of any of the above method claims.

14. A computer program product comprising computer-executable instructions for causing an auxiliary controller and/or power unit controller to collectively perform or cause to be performed any of the above methods.

15. A power supply system, comprising:
an auxiliary module, comprising at least one auxiliary energy storage element;
an input port operable to receive input electrical power from an external source;
a power unit comprising a power module for providing electrical power;
a charging supply circuit for delivering charging power on a supply line, wherein the charging power is usable for charging the auxiliary energy storage element,
wherein the charging supply circuit comprises:
a first power converter electrically coupled to the input port and operable to convert the input electrical power to a first converted electrical power output; and
a second power converter electrically coupled to the power module and operable to convert the electrical power provided by the power module to a second converted electrical power output,
wherein the charging supply circuit is adjustable between at least a first state and a second state,
wherein in the first state the charging power delivered on the supply line comprises at least a portion of the first converted electrical power output; and
wherein in the second state the charging power delivered on the supply line does not comprise any of the first converted electrical power output.
